# EUROPEAN PATENT APPLICATION

(11) **EP 4 199 422 A1**
(43) Date of publication of application: **21.06.2023**
(21) Application number: 21863439.2
(22) Date of filing: 03.08.2021
(51) Int. Cl.: H04L 9/40, G10L 19/16

(54) **CROSS-DEVICE AUDIO PLAYING METHOD, MOBILE TERMINAL, ELECTRONIC DEVICE AND STORAGE MEDIUM**

(30) Priority: 01.09.2020 CN 202010903800
(71) Applicant: Huawei Technologies Co., Ltd., Shenzhen, Guangdong 518129 (CN)
(72) Inventor: ZHOU, Fan, Shenzhen, Guangdong 518129 (CN); LI, Gang, Shenzhen, Guangdong 518129 (CN); SHAO, Lingxi, Shenzhen, Guangdong 518129 (CN); LIU, Ruoxi, Shenzhen, Guangdong 518129 (CN)
(74) Representative: Isarpatent
(86) International application number: PCT/CN2021/110177
(87) International publication number: WO 2022/048371

(57) **Abstract**

Embodiments of this application provide a cross-device audio playback method, a mobile terminal, an electronic device, and a storage medium, and relate to the field of communication technologies. The method includes: receiving audio capability information sent by a first device; creating a first type audio data stream and/or a second type audio data stream based on the audio capability information; and performing type identification on the first type audio data stream and/or the second type audio data stream, and sending the first type audio data stream and/or the second type audio data stream on which type identification are/is performed to the first device, to enable the first device to play the first type audio data stream and/or the second type audio data stream based on an identified type. According to the method provided in embodiments of this application, lossless cross-device audio playback can be implemented, sound quality of audio playback can be ensured, and user experience can be improved.

## Description

This application claims priority to Chinese Patent Application No. 202010903800.X, filed with the China National Intellectual Property Administration on September 1, 2020 and entitled "CROSS-DEVICE AUDIO PLAYBACK METHOD, MOBILE TERMINAL, ELECTRONIC DEVICE, AND STORAGE MEDIUM", which is incorporated herein by reference in its entirety.

### TECHNICAL FIELD

Embodiments of this application relate to the field of communication technologies, and in particular, to a cross-device audio playback method, a mobile terminal, an electronic device, and a storage medium.

### BACKGROUND

With continuous development of multi-screen collaboration technologies, cross-device resource sharing, screen projection, and collaborative operations can be implemented between a plurality of terminal devices. For example, a user may share information such as a screen image and sound on a mobile phone with a device such as a tablet or a television.

### SUMMARY

Embodiments of this application provide a cross-device audio playback method, a mobile terminal, an electronic device, and a storage medium, to provide a cross-device audio sharing manner, so as to implement lossless cross-device audio playback, ensure audio quality of audio playback, and improve user experience.

According to a first aspect, an embodiment of this application provides a cross-device audio playback method, applied to a mobile terminal. The method includes:

Audio capability information sent by a first device is received. Specifically, the first device may be an electronic device that has an audio playback capability and a wireless communication function. It should be noted that the first device may alternatively be a mobile terminal. The audio capability information is used to identify a type of audio supported by the first device, for example, low-delay audio or common audio.

A first type audio data stream and/or a second type audio data stream are/is created based on the audio capability information. Specifically, the first type audio data stream may be a common audio data stream, and the second type audio data stream may be a low-delay audio data stream. The created audio data stream may be determined based on a currently created audio application. For example, if a game application is created, a corresponding second type audio data stream may be created; if a music application is created, a corresponding first type audio data stream may be created; or if both a game application and a music application are created, a first type audio data stream and a second type audio data stream may be simultaneously created.

Type identification is performed on the first type audio data stream and/or the second type audio data stream, and the first type audio data stream and/or the second type audio data stream on which type identification are/is performed are/is sent to the first device, to enable the first device to play the first type audio data stream and/or the second type audio data stream based on an identified type. Specifically, the type identification may be used to identify a type of the audio data stream, so that the first device can play the audio data stream based on the type. For example, a low-delay audio data stream may be played at a time interval of 5 ms per frame, and a common audio data stream may be played at a time interval of 20 ms per frame.

In a possible implementation, that the first type audio data stream and/or the second type audio data stream on which type identification are/is performed are/is sent to the first device includes:
A current transmission condition of a network in which the mobile terminal is located is obtained. Specifically, the current transmission condition of the network in which the mobile terminal is located may include information such as a current network transmission delay and network transmission load of the mobile terminal.

The current transmission condition is compared with a preset transmission condition.

The first type audio data stream and/or the second type audio data stream are/is sent to the first device according to a preset first policy if the current transmission condition meets the preset transmission condition. Specifically, the preset transmission condition may be set based on a time attribute of an audio data stream. For example, if a time interval between every two audio data frames in the low-delay audio data streams is 5 ms, the current network transmission delay may be compared with 5 ms. The first policy may be an audio data stream sending policy, for example, may be sending one low-delay audio data frame to the first device every 5 ms, or may be sending two low-delay audio data frames to the first device every 10 ms.

The first type audio data stream and/or the second type audio data stream are/is sent to the first device according to a preset second policy if the current transmission condition does not meet the preset transmission condition.

In a possible implementation, that a first type audio data stream and/or a second type audio data stream are/is created based on the audio capability information includes:

An audio type in the audio capability information is parsed. Specifically, the audio type is used to identify a type of an audio data stream supported by the first device, and the audio type may include a first type and a second type.

First type audio data frames are sequentially created based on a preset first time interval if the audio capability information includes the first type. Specifically, the preset first time interval is corresponding to the first type. For example, if the first type audio data stream is a common audio data stream, the preset first time interval may be 20 ms.

A type of a current audio application is determined if the audio capability information includes a second type. Specifically, the audio application is used to identify an audio application currently opened by the user. For example, the audio application may be a game, music, or the like.

First type audio data frames are sequentially created based on a preset first time interval if the type of the audio application corresponds to the first type.

Second type audio data frames are sequentially created based on a preset second time interval if the type of the audio application corresponds to the second type. Specifically, the second type audio data stream is a low-delay audio data stream. Therefore, the preset second time interval may be 5 ms.

In a possible implementation, that the first type audio data stream and/or the second type audio data stream are/is sent to the first device according to a preset first policy if the current transmission condition meets the preset transmission condition includes:
The first type audio data stream is sent to the first device based on a first preset time interval corresponding to the first type audio data stream if a network transmission delay is less than or equal to a preset first time threshold and is greater than a preset second time threshold; and/or
the second type audio data stream is sent to the first device based on a time interval corresponding to the first time threshold; or
the first type audio data stream is sent to the first device based on a first preset time interval corresponding to the first type audio data stream if a network transmission delay is less than or equal to a preset second time threshold; and/or
the second type audio data stream is sent to the first device based on a time interval corresponding to the second time threshold; and
that the first type audio data stream and/or the second type audio data stream are/is sent to the first device according to a preset second policy if the current transmission condition does not meet the preset transmission condition includes:
   if a network transmission delay is greater than a preset third time threshold, the first type audio data stream and/or the second type audio data stream are/is sent to the first device based on a time interval corresponding to the third time threshold.

An embodiment of this application further provides a cross-device audio playback method, applied to a first device. The method includes:
obtaining audio capability information, and sending the audio capability information to a mobile terminal, where the audio capability information includes a first type and/or a second type;
receiving an audio data stream sent by the mobile terminal;
performing type identification on the audio data stream; and
playing a first type audio data stream based on a first preset time interval corresponding to the first type audio data stream if a type of the audio data stream is the first type; or
playing a second type audio data stream based on a second preset time interval corresponding to the second type audio data stream if a type of the audio data stream is the second type.

According to a second aspect, an embodiment of this application provides a cross-device audio playback apparatus, including:
a receiving module, configured to receive audio capability information sent by a first device;
a creating module, configured to create a first type audio data stream and/or a second type audio data stream based on the audio capability information; and
a sending module, configured to perform type identification on the first type audio data stream and/or the second type audio data stream, and send the first type audio data stream and/or the second type audio data stream on which type identification are/is performed to the first device, to enable the first device to play the first type audio data stream and/or the second type audio data stream based on an identified type.

In a possible implementation, the sending module further includes:
an obtaining unit, configured to obtain a current transmission condition of a network in which a mobile terminal is located; and
a comparison unit, configured to: compare the current transmission condition with a preset transmission condition; and send the first type audio data stream and/or the second type audio data stream to the first device according to a preset first policy if the current transmission condition meets the preset transmission condition; or send the first type audio data stream and/or the second type audio data stream to the first device according to a preset second policy if the current transmission condition does not meet the preset transmission condition.

In a possible implementation, the creating module further includes:
a parsing unit, configured to parse an audio type in the audio capability information; and
a determining unit, configured to: sequentially create first type audio data frames based on a preset first time interval if the audio capability information includes a first type; or determine a type of a current audio application if the audio capability information includes a second type; and sequentially create first type audio data frames based on a preset first time interval if the type of the audio application corresponds to the first type; or sequentially create second type audio data frames based on a preset second time interval if the type of the audio application corresponds to the second type.

In a possible implementation, the comparison unit is further configured to:
send the first type audio data stream to the first device based on a first preset time interval corresponding to the first type audio data stream if a network transmission delay is less than or equal to a preset first time threshold and is greater than a preset second time threshold; and/or
send the second type audio data stream to the first device based on a time interval corresponding to the first time threshold; or
send the first type audio data stream to the first device based on a first preset time interval corresponding to the first type audio data stream if a network transmission delay is less than or equal to a preset second time threshold; and/or
send the second type audio data stream to the first device based on a time interval corresponding to the second time threshold; and
if a network transmission delay is greater than a preset third time threshold, send the first type audio data stream and/or the second type audio data stream to the first device based on a time interval corresponding to the third time threshold.

In a possible implementation, the apparatus further includes:
a query module, configured to send a query request to the first device, to enable the first device to send the audio capability information based on the query request.

An embodiment of this application further provides a cross-device audio playback apparatus, including:
an obtaining module, configured to obtain audio capability information, and send the audio capability information to a mobile terminal, where the audio capability information includes a first type and/or a second type;
a receiving module, configured to receive an audio data stream sent by the mobile terminal;
an identification module, configured to perform type identification on the audio data stream; and
a playback module, configured to: play a first type audio data stream based on a first preset time interval corresponding to the first type audio data stream if a type of the audio data stream is the first type; or play a second type audio data stream based on a second preset time interval corresponding to the second type audio data stream if a type of the audio data stream is the second type.

According to a third aspect, an embodiment of this application provides a mobile terminal, including:
a memory, where the memory is configured to store computer program code, the computer program code includes instructions, and when the mobile terminal reads the instructions from the memory, the mobile terminal is enabled to perform the following steps:
receiving audio capability information sent by a first device;
creating a first type audio data stream and/or a second type audio data stream based on the audio capability information; and
performing type identification on the first type audio data stream and/or the second type audio data stream, and sending the first type audio data stream and/or the second type audio data stream on which type identification are/is performed to the first device, to enable the first device to play the first type audio data stream and/or the second type audio data stream based on an identified type.

In a possible implementation, when the instructions are executed by the mobile terminal, that the mobile terminal is enabled to perform the step of sending the first type audio data stream and/or the second type audio data stream on which type identification are/is performed to the first device includes:
obtaining a current transmission condition of a network in which the mobile terminal is located;
comparing the current transmission condition with a preset transmission condition; and
sending the first type audio data stream and/or the second type audio data stream to the first device according to a preset first policy if the current transmission condition meets the preset transmission condition; or
sending the first type audio data stream and/or the second type audio data stream to the first device according to a preset second policy if the current transmission condition does not meet the preset transmission condition.

In a possible implementation, when the instructions are executed by the mobile terminal, that the mobile terminal is enabled to perform the step of creating a first type audio data stream and/or a second type audio data stream based on the audio capability information includes:
parsing an audio type in the audio capability information; and
sequentially creating first type audio data frames based on a preset first time interval if the audio capability information includes a first type; or
determining a type of a current audio application if the audio capability information includes a second type; and
sequentially creating first type audio data frames based on a preset first time interval if the type of the audio application corresponds to the first type; or
sequentially creating second type audio data frames based on a preset second time interval if the type of the audio application corresponds to the second type.

In a possible implementation, when the instructions are executed by the mobile terminal, that the mobile terminal is enabled to perform the step of sending the first type audio data stream and/or the second type audio data stream to the first device according to a preset first policy if the current transmission condition meets the preset transmission condition includes:
sending the first type audio data stream to the first device based on a first preset time interval corresponding to the first type audio data stream if a network transmission delay is less than or equal to a preset first time threshold and is greater than a preset second time threshold; and/or
sending the second type audio data stream to the first device based on a time interval corresponding to the first time threshold; or
sending the first type audio data stream to the first device based on a first preset time interval corresponding to the first type audio data stream if a network transmission delay is less than or equal to a preset second time threshold; and/or
sending the second type audio data stream to the first device based on a time interval corresponding to the second time threshold; and
that the mobile terminal is enabled to perform the step of sending the first type audio data stream and/or the second type audio data stream to the first device according to a preset second policy if the current transmission condition does not meet the preset transmission condition includes:
   if a network transmission delay is greater than a preset third time threshold, sending the first type audio data stream and/or the second type audio data stream to the first device based on a time interval corresponding to the third time threshold.

In a possible implementation, when the instructions are executed by the mobile terminal, the mobile terminal is further enabled to perform the following step:
sending a query request to the first device, to enable the first device to send the audio capability information based on the query request.

An embodiment of this application further provides a first device, including:
a memory, where the memory is configured to store computer program code, the computer program code includes instructions, and when the device reads the instructions from the memory, the device is enabled to perform the following steps:
obtaining audio capability information, and sending the audio capability information to a mobile terminal, where the audio capability information includes a first type and/or a second type;
receiving an audio data stream sent by the mobile terminal;
performing type identification on the audio data stream; and
playing a first type audio data stream based on a first preset time interval corresponding to the first type audio data stream if a type of the audio data stream is the first type; or
playing a second type audio data stream based on a second preset time interval corresponding to the second type audio data stream if a type of the audio data stream is the second type.

According to a fourth aspect, an embodiment of this application provides a computer-readable storage medium. The computer-readable storage medium stores a computer program, and when the computer program is run on a computer, the computer is enabled to perform the method according to the first aspect.

According to a fifth aspect, an embodiment of this application provides a computer program. When the computer program is executed by a computer, the computer program is used to perform the method according to the first aspect.

In a possible design, all or some of the programs in the fifth aspect may be stored in a storage medium encapsulated with the processor, or some or all of the programs may be stored in a memory that is not encapsulated with the processor

### BRIEF DESCRIPTION OF DRAWINGS

FIG. 1 is a schematic diagram of an embodiment of an application scenario according to an embodiment of this application;
FIG. 2 is a flowchart of an embodiment of a cross-device audio playback method according to this application;
FIG. 3 is a schematic diagram of a system architecture according to an embodiment of this application;
FIG. 4 is a schematic diagram of a structure of an embodiment of a cross-device audio playback apparatus according to this application;
FIG. 5 is a schematic diagram of a structure of another embodiment of a cross-device audio playback apparatus according to this application; and
FIG. 6 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of means two or more than two.

Currently, when playing local audio, a mobile terminal supports two audio types: common audio and low-delay audio. The common audio has a high requirement on a sound effect. Therefore, audio mixing and sound effect processing need to be performed on the common audio. Therefore, a time interval between two common audio frames may be set to be slightly longer, for example, a time interval between two audio frames may be set to 20 ms. The low-delay audio has a high requirement for real-time performance. Therefore, audio mixing and sound effect processing do not need to be performed on the low-delay audio. Therefore, a time interval between two low-delay audio frames may be set to be shorter, for example, a time interval between two low-delay audio frames may be set to 5 ms.

When a segment of audio data is shared between devices, for example, when a mobile terminal sends local audio to a sharing device (for example, a television) for playing, because the mobile terminal cannot obtain an audio playback capability of the sharing device, the mobile terminal can only create common audio, and then send the common audio to the sharing device for playing. As a result, a requirement of the low-delay audio cannot be met during audio sharing.

Based on the foregoing problem, an embodiment of this application provides a cross-device audio playback method, to implement lossless cross-device audio playback, and improve user experience.

This embodiment of this application may be applied to a mobile terminal. The mobile terminal may also be referred to as a terminal device, user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN, and may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, an terminal in an Internet of Vehicles, a computer, a laptop computer, a handheld communication device, a handheld computing device, a satellite wireless device, a wireless modem card, a television set-top box (Set Top Box, STB), customer premise equipment (customer premise equipment, CPE) and/or another device for communicating over a wireless system, and a next-generation communications system, for example, a mobile terminal in a 5G network, or a mobile terminal in a future evolved public land mobile network (Public Land Mobile Network, PLMN).

A specific form of the mobile terminal that performs the technical solutions is not specially limited in this embodiment of this application.

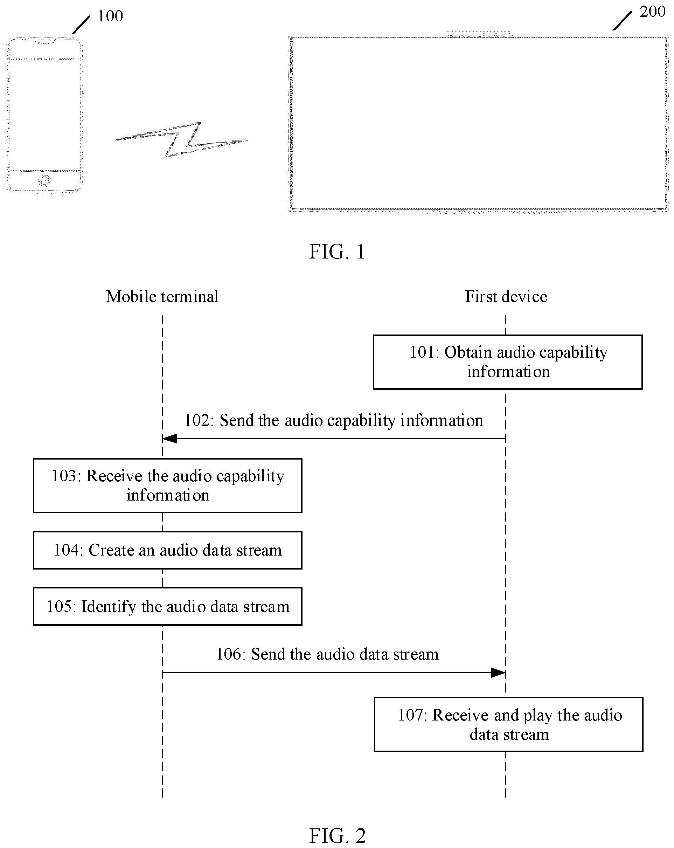

With reference to FIG. 1 to FIG. 3, a cross-device audio playback method provided in an embodiment of this application is described herein.

FIG. 1 is an architecture diagram of an embodiment of an application scenario of a cross-device audio playback method according to this application.

As shown in FIG. 1, a mobile terminal 100 may communicate with a first device 200 in a wireless communication manner (for example, Bluetooth or Wi-Fi). The first device 200 may be a device with a wireless communication function and an audio playback function, for example, a smart speaker, a mobile phone, a television, or a tablet. A specific form of the first device 200 is not limited in this embodiment of this application.

FIG. 2 is a schematic flowchart of an embodiment of a cross-device audio playback method according to this application. The method may include the following steps.

Step 101: A first device 200 obtains audio capability information, and sends the audio capability information to a mobile terminal 100.

Specifically, the audio capability information is used to identify an audio capability of the first device 200, and the audio capability information may include a first type and a second type. The first type may be used to identify a capability of common audio, and the second type may be used to identify a capability of low-delay audio.

The audio capability information of the first device 200 may be preset in the first device 200, for example, may be set at delivery of the first device 200. The audio capability information of the first device 200 may alternatively be automatically generated by collecting hardware information in the first device 200. For example, audio hardware information in the first device 200 is determined, to determine whether the first device 200 supports the first type and/or the second type of audio.

Step 102: The first device 200 sends the audio capability information to the mobile terminal 100.

After the mobile terminal 100 establishes a connection (for example, a Bluetooth connection or a Wi-Fi connection) to the first device 200, the first device 200 may send the audio capability information to the mobile terminal 100, so that the audio capability information can be shared between the two devices.

Optionally, after receiving a query request of the mobile terminal 100, the first device 200 may send the audio capability information to the mobile terminal 100. The query request may be used to query the audio capability information of the first device 200.

Step 103: The mobile terminal 100 receives the audio capability information of the first device 200.

Specifically, after receiving the audio capability information of the first device 200, the mobile terminal 100 parses the audio capability information to obtain a type (for example, the first type and/or the second type) in the audio capability information.

Step 104: When detecting a first operation performed by a user to start an audio application, the mobile terminal 100 creates an audio data stream based on the audio capability information.

Specifically, the user may perform an operation on the mobile terminal 100 to start an audio application. For example, the user may start a game application, a call application, or the like in the mobile terminal 100 by tapping an icon of the application. In response to the received operation of starting the audio application by the user, the mobile terminal 100 may create the audio data stream based on the audio capability information.

For example, the mobile terminal 100 may determine the type in the audio capability information.

If the mobile terminal 100 determines that the audio capability information includes the first type, the mobile terminal 100 establishes an audio data stream based on the first type. For example, the mobile terminal 100 may create a common audio data stream.

If the mobile terminal 100 determines that the audio capability information includes the first type and the second type, the mobile terminal 100 may separately establish audio data streams of the first type and/or the second type. For example, the mobile terminal 100 may create a common audio data stream and/or a low-delay audio data stream based on a type of the audio application. For example, if the audio application is of a type such as a game or a call, the mobile terminal 100 may create a low-delay audio data stream. If the audio application is of a type such as music, the mobile terminal 100 may create a common audio data stream.

Step 105: The mobile terminal 100 identifies the audio data stream.

Specifically, after creating the first type audio data stream and/or the second type audio data stream, the mobile terminal 100 may further identify, so that the first type audio data stream and/or the second type audio data stream are/is identified by the first device 200. In specific implementation, the mobile terminal 100 may identify the first type audio data stream as the first type, and the mobile terminal 100 may further identify the second type audio data stream as the second type.

Step 106: The mobile terminal 100 sends the audio data stream to the first device 200.

Specifically, if the mobile terminal 100 generates the first type audio data stream, the mobile terminal 100 may send the first type audio data stream to the first device 200. If the mobile terminal 100 generates the second type audio data stream, the mobile terminal 100 may send the second type audio data stream to the first device 200. If the mobile terminal 100 generates the first type audio data stream and the second type audio data stream, the mobile terminal 100 may send the first type audio data stream and the second type audio data stream to the first device 200.

Further, the mobile terminal 100 may further obtain status information of a current network environment. The status information of the network environment may include a delay and load. During specific implementation, the mobile terminal 100 may identify delay and load information of the current network environment based on a network transmission protocol, for example, a transmission control protocol (Transmission Control Protocol, TCP). For example, a TCP network packet supports a round-trip time (Round-Trip Time, RTT) packet and an acknowledgment (ACK) packet. A network transmission delay may be obtained by using the RTT packet, and a network packet loss may be obtained through calculation by using the ACK packet. In other words, the load information of the network can be obtained through calculation.

Further, the mobile terminal 100 may further determine a sending policy based on the status information of the network environment. The sending policy may be packing and sending the first type audio data stream and/or the second type audio data stream based on the delay and the load in the status information of the network environment.

For example, if the mobile terminal 100 determines that the delay is small and stable, for example, the mobile terminal may calculate a delay in a preset historical time period, and if an average delay value in the preset historical time period is less than a first threshold (for example, 10 ms), the mobile terminal 100 may consider that the delay is relatively small and stable, the mobile terminal may pack and send the first type audio data stream and/or the second type audio data stream. For example, the mobile terminal 100 may send the audio data stream to the first device 200 in a manner of sending two frames of second type audio data (for example, low-delay audio data) every 10 ms and/or sending one frame of first type audio data (for example, common audio data) every 20 ms. If an average delay value is less than a second threshold (for example, 5 ms), the mobile terminal may send the audio data stream to the first device 200 in a manner of sending one frame of second type audio data (for example, low-delay audio data) every 5 ms and/or sending one frame of first type audio data (for example, common audio data) every 20 ms.

If the mobile terminal 100 determines that the delay is poor and unstable, for example, if the delay is greater than a third threshold (for example, 20 ms), the first device 200 cannot stably receive the audio data if the mobile terminal 100 sends one frame of second type audio data every 5 ms, and consequently the playback is also discontinuous, the mobile terminal 100 may send the audio data stream to the first device 200 in a manner of sending four frames of second type audio data and/or one frame of first type audio data every 20 ms.

Step 107: The first device 200 receives the audio data stream sent by the mobile terminal 100, and plays the audio data stream.

Specifically, after receiving the audio data stream sent by the mobile terminal 100, the first device 200 may determine a type of the audio data stream.

If the first device 200 determines that the video data stream is of the first type (for example, common audio data stream), the first device 200 plays the video data stream based on a time interval (for example, 20 ms) corresponding to the first type audio data stream.

If the first device 200 determines that the video data stream is of the second type (for example, low-delay audio data stream), the first device 200 plays the video data stream based on a time interval (for example, 5 ms) corresponding to the second type audio data stream.

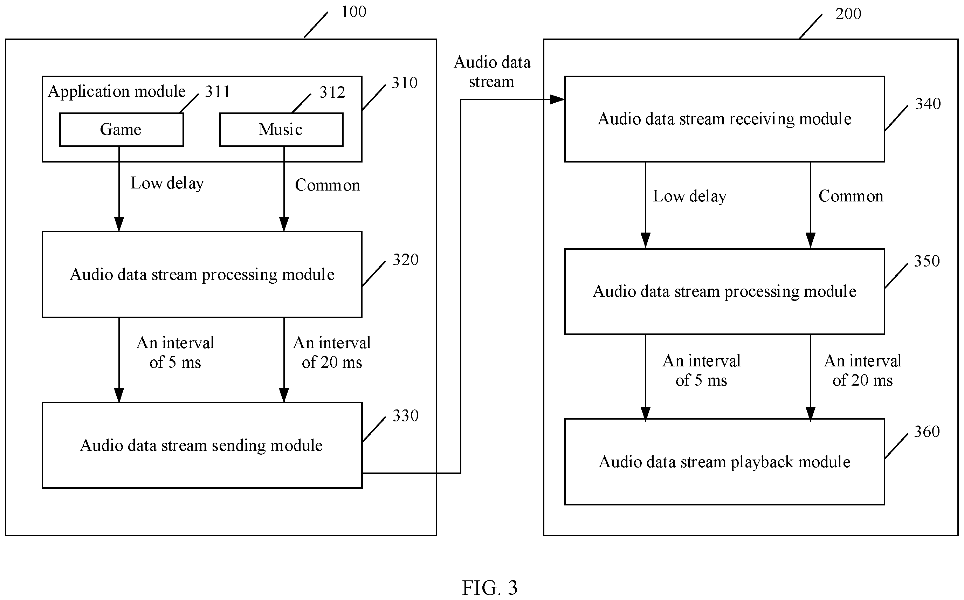

The following describes the cross-device audio playback method in this application with reference to FIG. 3. As shown in FIG. 3, a mobile terminal 100 includes an application module 310, an audio data stream processing module 320, and an audio data stream sending module 330. The application module 310 is configured to start a corresponding application, to enable the application to generate a corresponding audio data stream. The application module 310 may include one or more applications. For example, the application module 310 includes an application 311 and an application 312. For example, the application 311 may be a game, and the application 312 may be music. After a user taps an icon of an application to start the application, for example, after the user starts the application 311 and the application 312, in response to the user operation, the application 311 may generate a second type audio data stream, and the application 312 may generate a first type audio data stream. The audio data stream processing module 320 may be configured to process the audio data stream generated by the application module 310, for example, the audio data stream processing module 320 may send the audio data stream to the audio data stream sending module 330 at a preset time interval. For example, the audio data stream processing module 320 may perform processing such as audio mixing and sound effect processing on the first type audio data stream, send the first type audio data stream to the audio data stream sending module 330 at a time interval of one frame of first type audio data every 20 ms, and send the second type audio data stream to the audio data stream sending module 330 at a time interval of one frame of second type audio data every 5 ms. After receiving the audio data stream sent by the audio data stream processing module 320, the audio data stream sending module 330 sends the audio data stream to a first device 200 according to a current sending policy. The current sending policy may be determined based on current network environment information (for example, a delay). It may be understood that, before sending the audio data stream, the audio data stream processing module 320 may further identify the audio data stream, for example, identify the first type audio data stream as a first type, and identify the second type audio data stream as a second type.

The first device 200 includes an audio data stream receiving module 340, an audio data stream processing module 350, and an audio data stream playback module 360. The audio data stream receiving module 340 is configured to receive the audio data stream sent by the audio data stream sending module 330 in the mobile terminal 100. After receiving the audio data stream, the audio data stream receiving module 340 may identify a type of the audio data stream, to distinguish whether the audio data stream is of the first type or the second type, and send the audio data stream to the audio data stream processing module 350. After receiving the audio data stream sent by the audio data stream receiving module 340, the audio data stream processing module 350 performs audio mixing and sound effect processing on the first type audio data stream, sends the first type audio data stream to the audio data stream playback module 360 at a time interval of one frame every 20 ms, and sends the second type audio data stream to the audio data stream playback module 360 at a time interval of one frame every 5 ms. After receiving the audio data stream sent by the audio data stream processing module 350, the audio data stream playback module 360 plays the first type audio data stream at a time interval of one frame every 20 ms, and plays the second type audio data stream at a time interval of one frame every 5 ms. In this way, audio sharing between the mobile terminal 100 and the first device 200 can be completed, lossless transmission of the audio data stream can be implemented, sound quality of the audio data stream can be ensured, and user experience can be improved.

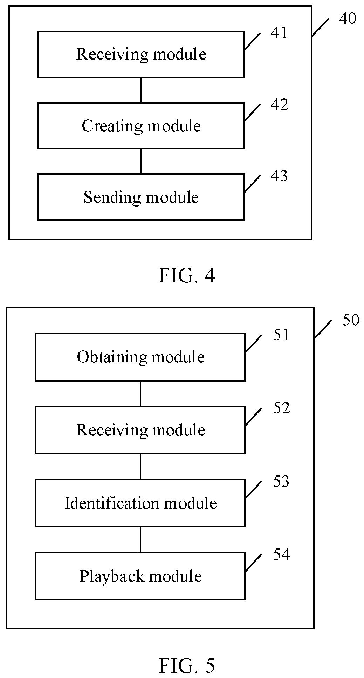

FIG. 4 is a schematic diagram of a structure of an embodiment of a cross-device audio playback apparatus according to this application. As shown in FIG. 4, the cross-device audio playback apparatus 40 may include a receiving module 41, a creating module 42, and a sending module 43.

The receiving module 41 is configured to receive audio capability information sent by a first device.

The creating module 42 is configured to create a first type audio data stream and/or a second type audio data stream based on the audio capability information.

The sending module 43 is configured to perform type identification on the first type audio data stream and/or the second type audio data stream, and send the first type audio data stream and/or the second type audio data stream on which type identification are/is performed to the first device, to enable the first device to play the first type audio data stream and/or the second type audio data stream based on an identified type.

In a possible implementation, the sending module 43 further includes an obtaining unit 431 and a comparison unit 432.

The obtaining unit 431 is configured to obtain a current transmission condition of a network in which a mobile terminal is located.

The comparison unit 432 is configured to: compare the current transmission condition with a preset transmission condition; and send the first type audio data stream and/or the second type audio data stream to the first device according to a preset first policy if the current transmission condition meets the preset transmission condition; or send the first type audio data stream and/or the second type audio data stream to the first device according to a preset second policy if the current transmission condition does not meet the preset transmission condition.

In a possible implementation, the creating module 42 further includes a parsing unit 421 and a determining unit 422.

The parsing unit 421 is configured to parse an audio type in the audio capability information.

The determining unit 422 is configured to: sequentially create first type audio data frames based on a preset first time interval if the audio capability information includes a first type; determine a type of a current audio application if the audio capability information includes a second type; and sequentially create first type audio data frames based on a preset first time interval if the type of the audio application corresponds to the first type; or sequentially create second type audio data frames based on a preset second time interval if the type of the audio application corresponds to the second type.

In a possible implementation, the comparison unit 432 is further configured to: send the first type audio data stream to the first device based on a first preset time interval corresponding to the first type audio data stream if a network transmission delay is less than or equal to a preset first time threshold and is greater than a preset second time threshold; and/or
send the second type audio data stream to the first device based on a time interval corresponding to the first time threshold; or
send the first type audio data stream to the first device based on a first preset time interval corresponding to the first type audio data stream if a network transmission delay is less than or equal to a preset second time threshold; and/or
send the second type audio data stream to the first device based on a time interval corresponding to the second time threshold; or
if a network transmission delay is greater than a preset third time threshold, send the first type audio data stream and/or the second type audio data stream to the first device based on a time interval corresponding to the third time threshold.

In a possible implementation, the apparatus 40 further includes a query module 44.

The query module 44 is configured to send a query request to the first device, to enable the first device to send the audio capability information based on the query request.

FIG. 5 is a schematic diagram of a structure of another embodiment of a cross-device audio playback apparatus according to this application. As shown in FIG. 5, the cross-device audio playback apparatus 50 may include an obtaining module 51, a receiving module 52, an identification module 53, and a playback module 54.

The obtaining module 51 is configured to obtain audio capability information, and send the audio capability information to a mobile terminal, where the audio capability information includes a first type and/or a second type.

The receiving module 52 is configured to receive an audio data stream sent by the mobile terminal.

The identification module 53 is configured to perform type identification on the audio data stream.

The playback module 54 is configured to: play a first type audio data stream based on a first preset time interval corresponding to the first type audio data stream if a type of the audio data stream is the first type; or play a second type audio data stream based on a second preset time interval corresponding to the second type audio data stream if a type of the audio data stream is the second type.

It should be understood that division into the modules of the cross-device audio playback apparatuses shown in FIG. 4 and FIG. 5 is merely logical function division. During actual implementation, all or some of the modules may be integrated into one physical entity or may be physically separated. In addition, all of the modules may be implemented in a form of software invoked by a processing element; or may be implemented in a form of hardware; or some modules may be implemented in a form of software invoked by a processing element, and some modules are implemented in a form of hardware. For example, a detection module may be a separately disposed processing element, or may be integrated into a chip of an electronic device for implementation. An implementation of another module is similar to the implementation of the detection module. In addition, all or some of these modules may be integrated, or may be implemented independently. In an implementation process, steps in the foregoing methods or the foregoing modules may be implemented by using an integrated logical circuit of hardware in the processing element, or by using instructions in a form of software.

For example, the foregoing modules may be one or more integrated circuits configured to implement the foregoing methods, for example, one or more application-specific integrated circuits (Application-Specific Integrated Circuits; ASICs for short below), one or more digital signal processors (Digital Signal Processors; DSPs for short below), or one or more field programmable gate arrays (Field Programmable Gate Arrays; FPGAs for short below). For another example, the modules may be integrated together, and implemented in a form of a system-on-a-chip (System-On-a-Chip, SOC for short below)

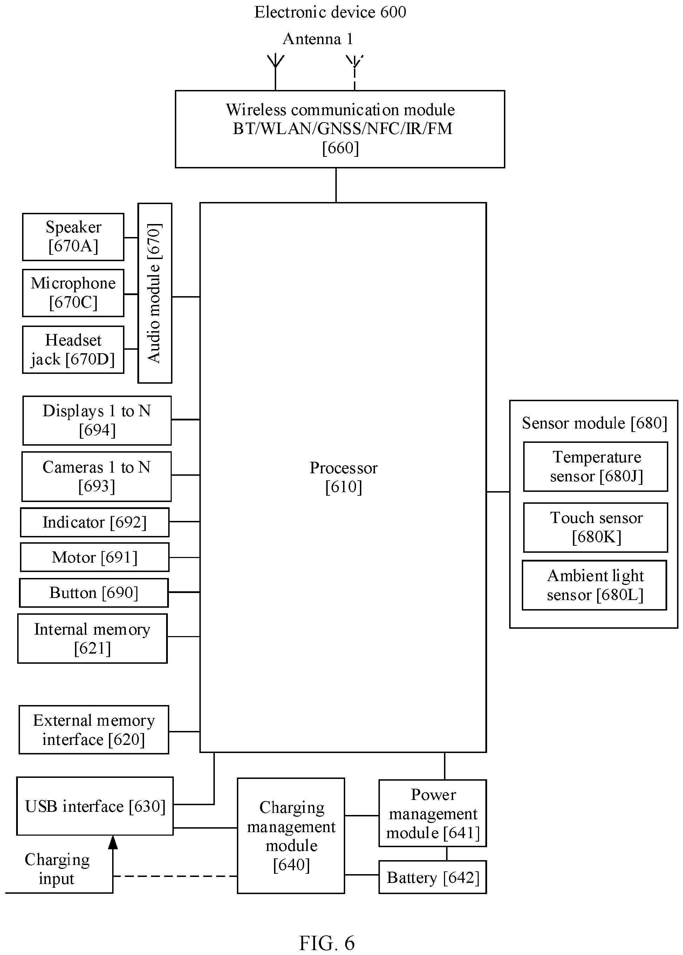

FIG. 6 is a schematic diagram of a structure of an electronic device 600. The mobile terminal 100 and the first device 200 may be the foregoing electronic device 600. The device may be configured to perform functions/steps in the methods provided in the embodiments shown in FIG. 1 to FIG. 3 of this application.

As shown in FIG. 6, the electronic device 600 may include a processor 610, an external memory interface 620, an internal memory 621, a universal serial bus (universal serial bus, USB) interface 630, a charging management module 640, a power management module 641, a battery 642, an antenna 1, a wireless communication module 660, an audio module 670, a speaker 670A, a microphone 670C, a headset jack 670D, a sensor module 680, a button 690, a motor 691, an indicator 692, a camera 693, and a display 694. The sensor module 680 may include a temperature sensor 680J, a touch sensor 680K, and an ambient light sensor 680L.

It can be understood that the structure illustrated in this embodiment of this application does not constitute a specific limitation on the electronic device 600. In some other embodiments of this application, the electronic device 600 may include more or fewer components than those shown in the figure, or some components may be combined, or some components may be split, or different component arrangements may be used. The components shown in the figure may be implemented by using hardware, software, or a combination of software and hardware.

The processor 610 may include one or more processing units. For example, the processor 610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 610, and is configured to store instructions and data. In some embodiments, the memory in the processor 610 is a cache memory. The memory may store instructions or data just used or cyclically used by the processor 610. If the processor 610 needs to use the instructions or the data again, the processor 610 may directly invoke the instructions or the data from the memory. This avoids repeated access, reduces a waiting time of the processor 610, and improves system efficiency.

In some embodiments, the processor 610 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 610 may include a plurality of groups of I2C buses. The processor 610 may be separately coupled to the touch sensor 680K, a charger, a flash, the camera 693, and the like through different I2C bus interfaces. For example, the processor 610 may be coupled to the touch sensor 680K through the I2C interface, so that the processor 610 communicates with the touch sensor 680K through the I2C bus interface, to implement a touch function of the electronic device 600.

The I2S interface may be configured to perform audio communication. In some embodiments, the processor 610 may include a plurality of groups of I2S buses. The processor 610 may be coupled to the audio module 670 through the I2S bus, to implement communication between the processor 610 and the audio module 670. In some embodiments, the audio module 670 may transmit an audio signal to the wireless communication module 660 through the I2S interface, to implement a function of holding a call during screen sharing.

The PCM interface may also be used to perform audio communication, and sample, quantize, and code an analog signal. In some embodiments, the audio module 670 may be coupled to the wireless communication module 660 through a PCM bus interface. In some embodiments, the audio module 670 may further transmit an audio signal to the wireless communication module 660 through the PCM interface, to implement a function of holding a call during screen sharing. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 610 to the wireless communication module 660. For example, the processor 610 communicates with the wireless communication module 660 through the UART interface, to implement a function of transmitting video encoding data.

The MIPI interface may be configured to connect the processor 610 to a peripheral component such as the display 694 or the camera 693. The MIPI interface includes a camera serial interface (camera serial interface, CSI), a display serial interface (display serial interface, DSI), and the like. In some embodiments, the processor 610 communicates with the camera 693 via the CSI, to implement a photographing function of the electronic device 600. The processor 610 communicates with the display 694 via the DSI, to implement a display function of the electronic device 600.

The GPIO interface may be configured by software. The GPIO interface may be configured as a control signal or a data signal. In some embodiments, the GPIO interface may be configured to connect the processor 610 to the camera 693, the display 694, the wireless communication module 660, the audio module 670, the sensor module 680, or the like. The GPIO interface may alternatively be configured as an I2C interface, an I2S interface, a UART interface, an MIPI interface, or the like.

The USB interface 630 is an interface that conforms to a USB standard specification, and may be specifically a mini USB interface, a micro USB interface, a USB Type-C interface, or the like. The USB interface 630 may be configured to connect to a charger to charge the electronic device 600, or may be configured to transmit data between the electronic device 600 and a peripheral device, or may be configured to connect to a headset for playing audio through the headset. This interface may further be configured to connect to another electronic device, for example, an augmented reality (augmented reality, AR) device.

It may be understood that an interface connection relationship between the modules illustrated in embodiments of the present invention is merely an example for description, and does not constitute a limitation on a structure of the electronic device 600. In some other embodiments of this application, the electronic device 600 may alternatively use an interface connection manner different from that in the foregoing embodiment, or use a combination of a plurality of interface connection manners.

The charging management module 640 is configured to receive a charging input from the charger. The charger may be a wireless charger or a wired charger. In some embodiments of wired charging, the charging management module 640 may receive a charging input of a wired charger through the USB interface 630. In some embodiments of wireless charging, the charging management module 640 may receive a wireless charging input through a wireless charging coil of the electronic device 600. The charging management module 640 supplies power to the electronic device through the power management module 641 while charging the battery 642.

The power management module 641 is configured to connect to the battery 642, the charging management module 640, and the processor 610. The power management module 641 receives an input from the battery 642 and/or the charging management module 640, and supplies power to the processor 610, the internal memory 621, the display 694, the camera 693, the wireless communication module 660, and the like. The power management module 641 may be further configured to monitor parameters such as a battery capacity, a battery cycle count, and a battery health status (electric leakage or impedance). In some other embodiments, the power management module 641 may alternatively be disposed in the processor 610. In some other embodiments, the power management module 641 and the charging management module 640 may alternatively be disposed in a same device.

A wireless communication function of the electronic device 600 may be implemented by using the antenna 1, the wireless communication module 660, or the like.

The antenna 1 is configured to transmit and receive an electromagnetic wave signal. Each antenna in the electronic device 600 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The wireless communication module 660 may provide a wireless communication solution that is applied to the electronic device 600 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 660 may be one or more components integrating at least one communication processing module. The wireless communication module 660 receives an electromagnetic wave through the antenna 1, performs frequency modulation and filtering processing on an electromagnetic wave signal, and sends a processed signal to the processor 610. The wireless communication module 660 may further receive a to-be-sent signal from the processor 610, perform frequency modulation and amplification on the signal, and convert the signal into an electromagnetic wave for radiation through the antenna 1.

In some embodiments, the antenna 1 and the wireless communication module 660 in the electronic device 600 are coupled, so that the electronic device 600 may communicate with a network and another device by using a wireless communication technology. The wireless communication technology may include BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 600 may implement a display function through the GPU, the display 694, the application processor, and the like. The GPU is a microprocessor for image processing, and is connected to the display 694 and the application processor. The GPU is configured to perform mathematical and geometric computation, and render an image. The processor 610 may include one or more GPUs, and the one or more GPUs execute program instructions to generate or change display information.

The display 694 is configured to display an image, a video, and the like. The display 694 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 600 may include one or N displays 694, where N is a positive integer greater than 1.

The electronic device 600 may implement a photographing function through the camera 693, the ISP, the video codec, the GPU, the display 694, the application processor, and the like.

The ISP is configured to process data fed back by the camera 693. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 693.

The camera 693 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 600 may include one or N cameras 693, where N is a positive integer greater than 1.

The digital signal processor is configured to process a digital signal, and may process another digital signal in addition to the digital image signal. For example, when the electronic device 600 selects a frequency, the digital signal processor is configured to perform Fourier transformation on frequency energy.

The video codec is configured to compress or decompress a digital video. The electronic device 600 may support one or more video codecs. In this way, the electronic device 600 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 600 may be implemented through the NPU, for example, image recognition, facial recognition, speech recognition, and text understanding.

The external memory interface 620 may be used to connect to an external memory card, for example, a micro SD card, to extend a storage capability of the electronic device 600. The external memory card communicates with the processor 610 through the external memory interface 620, to implement a data storage function. For example, files such as music and videos are stored in the external memory card.

The internal memory 621 may be configured to store computer-executable program code. The executable program code includes instructions. The internal memory 621 may include a program storage area and a data storage area. The program storage area may store an operating system, an application required by at least one function (for example, a voice playing function or an image playing function), and the like. The data storage area may store data (for example, audio data and an address book) and the like created when the electronic device 600 is used. In addition, the internal memory 621 may include a high-speed random access memory, or may include a nonvolatile memory, for example, at least one magnetic disk storage device, a flash memory, or a universal flash storage (universal flash storage, UFS). The processor 610 performs various function applications of the electronic device 600 and data processing by running the instructions stored in the internal memory 621 and/or instructions stored in the memory disposed in the processor.

The electronic device 600 may implement an audio function, such as music playing or recording, through the audio module 670, the speaker 670A, the microphone 670C, the headset jack 670D, the application processor, and the like.

The audio module 670 is configured to convert digital audio information into an analog audio signal for output, and is also configured to convert analog audio input into a digital audio signal. The audio module 670 may be further configured to code and decode audio signals. In some embodiments, the audio module 670 may be disposed in the processor 610, or some functional modules in the audio module 670 are disposed in the processor 610.

The speaker 670A, also referred to as a "loudspeaker", is configured to convert an audio electrical signal into a sound signal. The electronic device 600 may be used to listen to music or answer a call in a hands-free mode over the speaker 670A.

The microphone 670C, also referred to as a "mike" or a "mic", is configured to convert a sound signal into an electrical signal. When making a call or sending a voice message, a user may make a sound near the microphone 670C through the mouth of the user, to input a sound signal to the microphone 670C. At least one microphone 670C may be disposed in the electronic device 600. In some other embodiments, two microphones 670C may be disposed in the electronic device 600, to collect a sound signal and implement a noise reduction function. In some other embodiments, three, four, or more microphones 670C may alternatively be disposed in the electronic device 600, to collect a sound signal, implement noise reduction, and identify a sound source, to implement a directional recording function and the like.

The headset jack 670D is configured to connect to a wired headset. The headset jack 670D may be a USB interface 630, or may be a 3.5 mm open mobile terminal platform (open mobile terminal platform, OMTP) standard interface or cellular telecommunications industry association of the USA (cellular telecommunications industry association of the USA, CTIA) standard interface.

The ambient light sensor 680L is configured to sense ambient light brightness. The electronic device 600 may adaptively adjust brightness of the display 694 based on the sensed ambient light brightness. The ambient light sensor 680L may also be configured to automatically adjust white balance during shooting.

The temperature sensor 680J is configured to detect a temperature. In some embodiments, the electronic device 600 executes a temperature processing policy based on the temperature detected by the temperature sensor 680J. For example, when the temperature reported by the temperature sensor 680J exceeds a threshold, the electronic device 600 lowers performance of a processor located near the temperature sensor 680J, to reduce power consumption for thermal protection. In some other embodiments, when the temperature is lower than another threshold, the electronic device 600 heats the battery 642, to avoid abnormal shutdown of the electronic device 600 caused by a low temperature. In some other embodiments, when the temperature is lower than still another threshold, the electronic device 600 boosts an output voltage of the battery 642, to avoid abnormal shutdown caused by a low temperature.

The touch sensor 680K is also referred to as a "touch component". The touch sensor 680K may be disposed on the display 694, and the touch sensor 680K and the display 694 constitute a touchscreen, which is also referred to as a "touch screen". The touch sensor 680K is configured to detect a touch operation performed on or near the touch sensor. The touch sensor may transfer the detected touch operation to the application processor to determine a type of the touch event. A visual output related to the touch operation may be provided through the display 694. In some other embodiments, the touch sensor 680K may also be disposed on a surface of the electronic device 600 at a location different from that of the display 694.

The button 690 includes a power button, a volume button, and the like. The button 690 may be a mechanical button, or may be a touch button. The electronic device 600 may receive a button input, and generate a button signal input related to a user setting and function control of the electronic device 600.

The motor 691 may generate a vibration prompt. The motor 691 may be configured to provide an incoming call vibration prompt and a touch vibration feedback. For example, touch operations performed on different applications (for example, shooting and audio playback) may correspond to different vibration feedback effects. The motor 691 may also correspond to different vibration feedback effects for touch operations performed on different areas of the display 694. Different application scenarios (for example, a time reminder, information receiving, an alarm clock, and a game) may also correspond to different vibration feedback effects. A touch vibration feedback effect may be further customized.

The indicator 692 may be an indicator light, and may be configured to indicate a charging status and a power change, or may be configured to indicate a message, a missed call, a notification, and the like.

The electronic device 600 shown in FIG. 6 may be an intelligent electronic device such as a mobile phone, a television, a smart screen, a tablet computer, a notebook computer, or a PC. A form of the electronic device 600 is not limited in this embodiment. The electronic device 600 may be configured to perform the functions/steps in the methods provided in the embodiments of this application. For details, refer to the descriptions in the method embodiments in embodiments of this application. To avoid repetition, detailed descriptions are properly omitted herein.

This application further provides an electronic device. The device includes a storage medium and a central processing unit. The storage medium may be a nonvolatile storage medium, and the storage medium stores a computer-executable program. The central processing unit is connected to the nonvolatile storage medium, and executes the computer-executable program to implement the methods provided in the embodiments shown in FIG. 1 to FIG. 4 of this application.

In the foregoing embodiments, the processor may include, for example, a CPU, a DSP, a microcontroller, or a digital signal processor, and may further include a GPU, an embedded neural-network process unit (Neural-network Process Unit, NPU for short), and an image signal processor (Image Signal Processor, ISP for short). The processor may further include a necessary hardware accelerator or a logic processing hardware circuit, for example, an ASIC, or one or more integrated circuits configured to control program execution of the technical solutions in this application. In addition, the processor may have a function of operating one or more software programs. The software program may be stored in the storage medium.

A person of ordinary skill in the art may be aware that units and algorithm steps described in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments of this application, when any of the functions is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM for short below), a random access memory (Random Access Memory, RAM for short below), a magnetic disk, or a compact disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A cross-device audio playback method, applied to a mobile terminal, wherein the method comprises:
receiving audio capability information sent by a first device;
creating a first type audio data stream and/or a second type audio data stream based on the audio capability information; and
performing type identification on the first type audio data stream and/or the second type audio data stream, and sending the first type audio data stream and/or the second type audio data stream on which type identification are/is performed to the first device, to enable the first device to play the first type audio data stream and/or the second type audio data stream based on an identified type.

2. The method according to claim 1, wherein the sending the first type audio data stream and/or the second type audio data stream on which type identification are/is performed to the first device comprises:
obtaining a current transmission condition of a network in which the mobile terminal is located;
comparing the current transmission condition with a preset transmission condition; and
sending the first type audio data stream and/or the second type audio data stream to the first device according to a preset first policy if the current transmission condition meets the preset transmission condition; or
sending the first type audio data stream and/or the second type audio data stream to the first device according to a preset second policy if the current transmission condition does not meet the preset transmission condition.

3. The method according to claim 1, wherein the creating a first type audio data stream and/or a second type audio data stream based on the audio capability information comprises:
parsing an audio type in the audio capability information;
sequentially creating first type audio data frames based on a preset first time interval if the audio capability information comprises a first type;
determining a type of a current audio application if the audio capability information comprises a second type; and
sequentially creating the first type audio data frames based on the preset first time interval if the type of the audio application corresponds to the first type; or
sequentially creating second type audio data frames based on a preset second time interval if the type of the audio application corresponds to the second type.

4. The method according to claim 2, wherein the sending the first type audio data stream and/or the second type audio data stream to the first device according to a preset first policy if the current transmission condition meets the preset transmission condition comprises:
sending the first type audio data stream to the first device based on a first preset time interval corresponding to the first type audio data stream if a network transmission delay is less than or equal to a preset first time threshold and is greater than a preset second time threshold; and/or
sending the second type audio data stream to the first device based on a time interval corresponding to the first time threshold; or
sending the first type audio data stream to the first device based on a first preset time interval corresponding to the first type audio data stream if a network transmission delay is less than or equal to a preset second time threshold; and/or
sending the second type audio data stream to the first device based on a time interval corresponding to the second time threshold; and
the sending the first type audio data stream and/or the second type audio data stream to the first device according to a preset second policy if the current transmission condition does not meet the preset transmission condition comprises:
if a network transmission delay is greater than a preset third time threshold, sending the first type audio data stream and/or the second type audio data stream to the first device based on a time interval corresponding to the third time threshold.

5. The method according to any one of claims 1 to 4, wherein the method further comprises:
sending a query request to the first device, to enable the first device to send the audio capability information based on the query request.

6. A cross-device audio playback method, applied to a first device, wherein the method comprises:
obtaining audio capability information, and sending the audio capability information to a mobile terminal, wherein the audio capability information comprises a first type and/or a second type;
receiving an audio data stream sent by the mobile terminal;
performing type identification on the audio data stream; and
playing a first type audio data stream based on a first preset time interval corresponding to the first type audio data stream if a type of the audio data stream is the first type; or
playing a second type audio data stream based on a second preset time interval corresponding to the second type audio data stream if a type of the audio data stream is the second type.

7. A mobile terminal, comprising a memory, wherein the memory is configured to store computer program code, the computer program code comprises instructions, and when the mobile terminal reads the instructions from the memory, the mobile terminal is enabled to perform the following steps:
receiving audio capability information sent by a first device;
creating a first type audio data stream and/or a second type audio data stream based on the audio capability information; and
performing type identification on the first type audio data stream and/or the second type audio data stream, and sending the first type audio data stream and/or the second type audio data stream on which type identification are/is performed to the first device, to enable the first device to play the first type audio data stream and/or the second type audio data stream based on an identified type.

8. The mobile terminal according to claim 7, wherein when the instructions are executed by the mobile terminal, that the mobile terminal is enabled to perform the step of sending the first type audio data stream and/or the second type audio data stream on which type identification are/is performed to the first device comprises:
obtaining a current transmission condition of a network in which the mobile terminal is located;
comparing the current transmission condition with a preset transmission condition; and
sending the first type audio data stream and/or the second type audio data stream to the first device according to a preset first policy if the current transmission condition meets the preset transmission condition; or
sending the first type audio data stream and/or the second type audio data stream to the first device according to a preset second policy if the current transmission condition does not meet the preset transmission condition.

9. The mobile terminal according to claim 7, wherein when the instructions are executed by the mobile terminal, that the mobile terminal is enabled to perform the step of creating a first type audio data stream and/or a second type audio data stream based on the audio capability information comprises:
parsing an audio type in the audio capability information;
sequentially creating first type audio data frames based on a preset first time interval if the audio capability information comprises a first type;
determining a type of a current audio application if the audio capability information comprises a second type; and
sequentially creating the first type audio data frames based on the preset first time interval if the type of the audio application corresponds to the first type; or
sequentially creating second type audio data frames based on a preset second time interval if the type of the audio application corresponds to the second type.

10. The mobile terminal according to claim 8, wherein when the instructions are executed by the mobile terminal, that the mobile terminal is enabled to perform the step of sending the first type audio data stream and/or the second type audio data stream to the first device according to a preset first policy if the current transmission condition meets the preset transmission condition comprises:
sending the first type audio data stream to the first device based on a first preset time interval corresponding to the first type audio data stream if a network transmission delay is less than or equal to a preset first time threshold and is greater than a preset second time threshold; and/or
sending the second type audio data stream to the first device based on a time interval corresponding to the first time threshold; or
sending the first type audio data stream to the first device based on a first preset time interval corresponding to the first type audio data stream if a network transmission delay is less than or equal to a preset second time threshold; and/or
sending the second type audio data stream to the first device based on a time interval corresponding to the second time threshold; and
that the mobile terminal is enabled to perform the step of sending the first type audio data stream and/or the second type audio data stream to the first device according to a preset second policy if the current transmission condition does not meet the preset transmission condition comprises:
if a network transmission delay is greater than a preset third time threshold, sending the first type audio data stream and/or the second type audio data stream to the first device based on a time interval corresponding to the third time threshold.

11. The mobile terminal according to any one of claims 7 to 10, wherein when the instructions are executed by the mobile terminal, the mobile terminal is further enabled to perform the following step:
sending a query request to the first device, to enable the first device to send the audio capability information based on the query request.

12. A first device, comprising a memory, wherein the memory is configured to store computer program code, the computer program code comprises instructions, and when the device reads the instructions from the memory, the device is enabled to perform the following steps:
obtaining audio capability information, and sending the audio capability information to a mobile terminal, wherein the audio capability information comprises a first type and/or a second type;
receiving an audio data stream sent by the mobile terminal;
performing type identification on the audio data stream; and
playing a first type audio data stream based on a first preset time interval corresponding to the first type audio data stream if a type of the audio data stream is the first type; or
playing a second type audio data stream based on a second preset time interval corresponding to the second type audio data stream if a type of the audio data stream is the second type.

13. A computer-readable storage medium, comprising computer instructions, wherein when the computer instructions are run on a mobile terminal, the mobile terminal is enabled to perform the method according to any one of claims 1 to 5.

14. A computer-readable storage medium, comprising computer instructions, wherein when the computer instructions are run on a first device, the device is enabled to perform the method according to claim 6.

15. A computer program product, wherein when the computer program product is run on a computer, the computer is enabled to perform the method according to any one of claims 1 to 6.
